(19)
Europäisches Patentamt
European Patent Office
Office européen des brevets

(11) EP 0 598 786 B1

(12) EUROPÄISCHE PATENTSCHRIFT

(45) Veröffentlichungstag und Bekanntmachung des Hinweises auf die Patenterteilung: **29.10.1997 Patentblatt 1997/44**

(21) Anmeldenummer: **92917069.4**

(22) Anmeldetag: **07.08.1992**

(51) Int Cl.[6]: **H04N 7/00**

(86) Internationale Anmeldenummer: **PCT/EP92/01809**

(87) Internationale Veröffentlichungsnummer: **WO 93/04560 (04.03.1993 Gazette 1993/06)**

(54) **VERFAHREN, CODER UND DECODER ZUR KOMPATIBLEN ÜBERTRAGUNG UND/ODER AUFZEICHNUNG VON PROGRESSIVEN BILDSIGNALEN**

PROCESS, CODER AND DECODER FOR THE COMPATIBLE TRANSMISSION AND/OR RECORDING OF PROGRESSIVE IMAGE SIGNALS

PROCEDE, CODEUR ET DECODEUR DE TRANSMISSION ET/OU D'ENREGISTREMENT COMPATIBLES DE SIGNAUX VIDEO PROGRESSIFS

(84) Benannte Vertragsstaaten: **DE ES FR GB IT**

(30) Priorität: **16.08.1991 DE 4126950**
**19.12.1991 DE 4141956**

(43) Veröffentlichungstag der Anmeldung: **01.06.1994 Patentblatt 1994/22**

(73) Patentinhaber: **DEUTSCHE THOMSON-BRANDT GMBH**
**78048 Villingen-Schwenningen (DE)**

(72) Erfinder: **HÜTTER, Ingo**
**D-3100 Celle (DE)**

(56) Entgegenhaltungen:
**EP-A- 0 313 026**
**EP-A- 0 352 964**
**WO-A-87/05770**
**WO-A-91/07054**

- **PROCEEDINGS OF THE FOURTH INTERNATIONAL COLLOQUIUM ON ADVANCED TELEVISION SYSTEMS - OTTAWA - CA, 25-29 JUNE 1990 Seiten 5A.1.1 - 5A.1.23 VINCENT ET AL. 'Design Principles for ATV Systems'**
- **SIGNAL PROCESSING. IMAGE COMMUNICATION Bd. 2, Nr. 3, Oktober 1990, AMSTERDAM NL Seiten 319 - 331 GAUS ET AL. 'Wideband MAC-Compatible HDTV Transmission System'**
- **PATENT ABSTRACTS OF JAPAN vol. 15, no. 265 (E-1086)5. Juli 1991**
- **PATENT ABSTRACTS OF JAPAN vol. 12, no. 35 (E-579)2. Februar 1988**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 598 786 B1

## Beschreibung

Die Erfindung betrifft ein Verfahren, einen Coder und einen Decoder zur kompatiblen Übertragung und/oder Aufzeichnung von progressiven Bildsignalen.

### Stand der Technik

Zur digitalen Übertragung von Bewegtbildern (Bildtelefon, MPEG-Coder und -Decoder, MPEG: 'motion picture experts group') mit niedrigen Datenraten werden Verfahren angewendet, bei denen das aktuelle Bild mit Hilfe von Bewegungsvektoren für begrenzte Bildpunkt-Blöcke aus dem vorangegangenen Bild rekonstruiert wird. Bei der Rekonstruktion entstehende Fehler werden durch die Übertragung eines Fehler-Differenzbildes, welches im allgemeinen nur eine geringe Signalleistung hat und daher nur eine geringe Datenrate benötigt, korrigiert. Für die kompatible Übertragung von Fernsehsignalen können diese Verfahren aber nicht übernommen werden.

So ist es auch aus den "Proceedings of the Forth International Colloquium on Advanced Television Systems - Ottawa - CA, 25 - 29 June 1990, Seiten 5A.1.1-5A.1.23 bekannt, progressive Bildsignale kompatibel zu übertragen. Die Bildsignale werden hierbei in Interlace-Bildsignale umgewandelt und mit digitalen Zusatzinformationen versehen, wobei die Zusatzinformationen Bewegungsvektoren für Bildpunktblöcke enthalten. Ein Fehlerkorrekturverfahren im Fall von nicht korrekt ermittelten oder übertragenen Bewegungsvektoren wird dort noch nicht beschrieben.

### Erfindung

Der Erfindung liegt die Aufgabe zugrunde, ein Verfahren zur kompatiblen Übertragung und/oder Aufzeichnung von Bildsignalen mit einer verbesserten Bildqualität anzugeben. Diese Aufgabe wird durch das in Anspruch 1 angegebene erfindungsgemäße Verfahren gelöst.

Im Prinzip besteht das erfindungsgemäße Verfahren darin, daß zur kompatiblen Übertragung und/oder Aufzeichnung von progressiven Bildsignalen diese in Interlace-Bildsignale umgewandelt und mit digitalen Zusatzinformationen versehen werden und von Standard-Decodern ohne Auswertung dieser Zusatzinformationen decodiert werden können, wobei die Zusatzinformationen codierte Bewegungsinformationen undföder Interpolationsbefehle für Bildpunkt-Blöcke enthalten, die mit Hilfe der Interlace-Bildsignale zu progressiven Bildsignalen decodiert werden können, bei denen die Bildpunkt-Werte der den Zeilen der Interlace-Bildsignale entsprechenden Zeilen gleich den entsprechenden Bildpunkt-Werten der Interlace-Bildsignale sind.

Vorteilhafte Weiterbildungen des erfindungsgemäßen Verfahrens ergeben sich aus den zugehörigen abhängigen Ansprüchen.

Der Erfindung liegt die weitere Aufgabe zugrunde, einen Coder für das erfindungsgemäße Verfahren anzugeben. Diese Aufgabe wird durch die in Anspruch 8 angegebene erfindungsgemäße Einrichtung gelöst.

Im Prinzip ist der erfindungsgemäße Coder versehen mit einem Vertikalfilter 12 für progressive Bildsignale, die anschlieBend in einem Interlacer 13 vom progressiven Bildformat in ein Interlace-Bildformat umgesetzt werden, mit einem nachfolgenden Farbcoder 14, mit einem Vektorbildner 161, der aus dem Luminanzsignal am Eingang des Vertikalfilters 12 Bewegungsvektoren für die Bildpunkt-Blöcke gewinnt, mit einer nachgeschalteten Rekonstruktions-schaltung 162, die aus dem jeweils um ein Vollbild verzögerten, vorher rekonstruierten Luminanz-Vollbild aus einem Bildspeicher 18 und aus dem Luminanzsignal am Ausgang des Interlacers 13 mit Hilfe der im Vektorbildner 161 gefundenen Bewegungsvektoren progressive Bildsignale rekonstruiert, mit einem nachgeschalteten Vergleicher 163 zur Ermittlung von Bildpunkt-Blöcken mit zuzuordnendem Interpolationsbefehl, mit einem nachgeschalteten Zusatzinformations-Coder 17 zur Entropie- und Kanalcodierung der digitalen Zusatzinformationen und mit einer nachfolgenden Multiplexschaltung 15, die die Ausgangssignale des Farbcoders 14 und des Zusatzinformations-Coders 17 zusammenfaßt vor der Übertragung bzw. Aufzeichnung.

Der Erfindung liegt die weitere Aufgabe zugrunde, einen Decoder für das erfindungsgemäße Verfahren anzugeben. Diese Aufgabe wird durch die in Anspruch 10 angegebene erfindungsgemäße Einrichtung gelöst.

Im Prinzip ist der erfindungsgemäße Decoder versehen mit einer Trennschaltung 20 zur Abtrennung von übertragenen bzw. aufgezeichneten digitalen Zusatzinformationen von den Interlace-Bildsignalen, mit einem nachfolgenden Farbdecoder 21, mit einem nachgeschalteten Deinterlacer 25 für die Chrominanzkomponenten, mit einem Zusatzinformations-Decoder 22 zur Kanal- und Entropie-Decodierung der abgetrennten Zusatzinformationen, mit einer nachfolgenden Rekonstruktionsschaltung 23 zur Rekonstruktion eines progressiven Luminanz-Bildsignals aus dem Interlace-Bildsignal und den decodierten Bewegungsinformationen sowie einem jeweils in Bildspeicher 24 zwischengespeicherten, vorhergehenden Vollbild.

Vorteilhafte Weiterbildungen des erfindungsgemäßen Decoders ergeben sich aus den zugehörigen abhängigen Ansprüchen.

Durch die Erfindung ist die decoderseitige Rekonstruktion progressiver Bildsignale aus übertragenen bzw. aufgezeichneten Interlace-Bildsignalen möglich. Hierzu werden im Coder z.B. aus progressiv abgetasteten Kamerabildern für Blöcke von Bildpunkten Bewegungsvektoren gewonnen, die zum Decoder in Form von digitalen Zusatzinformationen übertragen werden. Mit Hilfe dieser Bewegungsvektoren rekonstruiert der Decoder jeweils aus dem vorherigen progressiven Bild das aktuelle progressive Bild. Außerdem werden die Hälfte der so rekonstruierten Zeilen durch die übertragenen bzw. aufgezeichneten Interlace-Zeilen ersetzt, so daß die eine Hälfte der Zeilen des wiedergegebenen Bildes aus den übertragenen Interlace-Zeilen und die andere Hälfte aus rekonstruierten Zeilen besteht.

Im Gegensatz zum oben beschriebenen Verfahren für die digitale Übertragung von Bewegtbildern bei niedrigen Datenraten ist das zusätzliche Übertragen eines Differenzbildes zur Korrektur eventueller Fehler aus Kapazitätsgründen normalerweise nicht möglich. Beim erfindungsgemäßen Verfahren zur Korrektur möglicher Rekonstruktionsfehler wird davon ausgegangen, daß Rekonstruktionsfehler nur dort auftreten, wo entweder schnelle translatorische Bewegungen auftreten, sodaß ein Bewegungsvektor-Sucher innerhalb seines Suchbereichs keinen passenden Block findet, oder wo Objekte schnell verformt werden und daher mit dem gefundenen, in seiner zeitlichen Auflösung begrenzten Vektor nicht korrekt rekonstruiert werden können. In beiden Fällen ist das Auge durch die schnelle Bewegung der Objekte gar nicht in der Lage, die volle vertikale Auflösung des Objektes, welche durch die Wandlung des Interlace-Bildes in ein progressives Bild erzielt werden soll, zu verarbeiten.
Vorteilhaft werden deshalb in Blöcken, in denen die fehlenden Zeilen nicht sinnvoll mit Hilfe von Bewegungsvektoren rekonstruiert werden können, diese Zeilen aus den übertragenen Interlace-Zeilen interpoliert. Der Coder muß daher feststellen, in welchen Blöcken Rekonstruktionsfehler auftreten und für diese Blöcke statt eines Vektors einen Interpolationsbefehl in den digitalen Zusatzinformationen übertragen. Diese Zusatzinformationen werden so übertragen bzw. aufgezeichnet, daß ein nach herkömmlichen Standards arbeitender Decoder, z.B. in einem 4:3-Fernsehempfänger, nicht gestört wird. Dafür ist beispielsweise im Fall von Composite-Bildsignalen eine Ultraschwarz-Modulation der Zusatzinformationen auf den Farbträger oder eine direkte Modulation des FBAS-Signals im Ultraschwarz-Bereich in den schwarzen Streifen des Letterbox-Formats geeignet. Damit ist es sowohl möglich, die Bildsignale als Interlace-Bildsignal auf herkömmlichen 4:3-Fernsehempfängern zu empfangen als auch in Verbindung mit dem Letterbox-Format als progressives Bild auf verbesserten 16:9-Fernsehern darzustellen.

## Zeichnungen

Anhand der Zeichnungen werden Ausführungsbeispiele der Erfindung beschrieben. Die Zeichnungen zeigen in:

- Fig. 1 Blockschaltbild eines erfindungsgemäßen Coders;
- Fig. 2 Blockschaltbild eines erfindungsgemäßen Decoders;
- Fig. 3 detaillierteres Blockschaltbild zur decoderseitigen Bildsignal-Rekonstruktion;
- Fig. 4 Bildpunkt-Pegeldiagramm zur Ermittlung von nicht verwendbaren Bewegungsvektoren;
- Fig. 5 Blockschaltbild einer zweiten Ausführungsform eines erfindungsgemäßen Coders.

## Ausführungsbeispiele

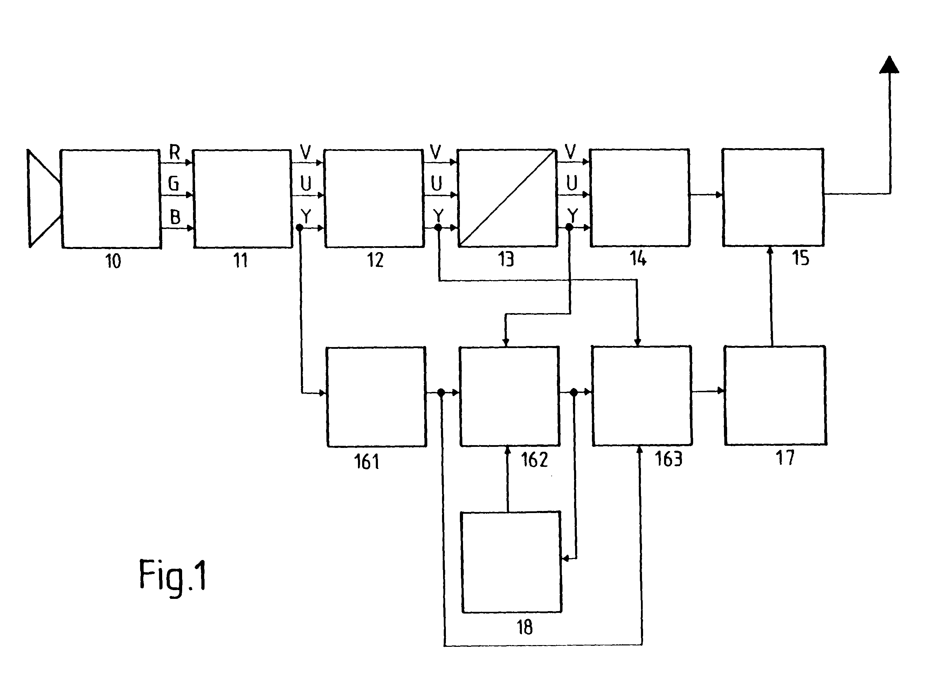

In Fig. 1 kann eine Kamera 10 progressive RGB-Signale liefern, z.B. mit 625 Zeilen (576 aktive) oder 525 Zeilen oder mit entsprechend verdoppelten Zeilenzahlen. Die RGB-Signale werden in einer Matrix 11 in das Luminanzsignal Y und die Chrominanzsignale U und V gewandelt. Anschließend werden die YUV-Signale in einem Vertikalfilter 12 für die anschließende Progressiv-Interlace-Umsetzung im Interlacer 13 tiefpaßgefiltert, um im Interlace-Bild der herkömmlichen Empfänger Alias zu vermeiden. Die gefilterten YUV-Bildsignale werden in einem anschließenden Farbcoder 14 zu kombinierten Y-C-Bildsignalen umgeformt. Dabei kann es sich sowohl um eine Umformung handeln, bei der die Chrominanz auf einem Träger der Luminanz überlagert wird (PAL, NTSC, SECAM) als auch um eine Umformung, bei der Luminanz Y und Chrominanz C im Zeitmultiplex angeordnet werden (MAC).
Die Bewegungsvektoren für die Bildpunkt-Blöcke werden in einem Vektorbildner 161 aus dem Luminanzsignal gewonnen, welches in der Matrix 11 erzeugt wurde. Dazu wird das Bild in Bildpunkt-Blöcke festgelegter Größe aufgeteilt. Vorteilhaft werden z.B. Blöcke der Größe 8*8, 10*10 oder 16*16 gebildet, doch es sind auch andere quadratische oder nicht-quadratische Blockgrößen anwendbar. Ist die Zahl der aktiven Zeilen nicht durch die Blockhöhe teilbar, so kann z.B. die Rekonstruktion der nicht von den Blöcken erfaßten Randzeilen durch Wiederholung dieser Zeilen von Bild zu Bild erfolgen. Vorteilhaft hat der Vektorbildner 161 einen Suchbereich von ±8 Bildpunkten mit einer zusätzlichen Halbpixel-Suche. Weil die Vektoren aus dem Eingangssignal des Vertikalfilters 12 gebildet werden, wird eine höhere vertikale Auflösung der Vektoren ermöglicht. Die Vektoren können aber auch aus dem Ausgangssignal des Vertikalfilters 12 gebildet werden. In einer Rekonstruktions-Schaltung 162 werden aus dem jeweils um ein Vollbild verzögerten, vorher rekonstruierten Luminanz-Vollbild aus einem Bildspeicher 18 und dem Luminanzsignal am Ausgang des Interlacers 13 mit Hilfe der im Vektorbildner 161 gefundenen Bewegungsvektoren progressive Bilder rekonstruiert.
In einem nachgeschalteten Vergleicher 163 wird jeweils das so rekonstruierte progressive Bild und das originale progressive Bild (vor der Interlace-Unterabtastung) miteinander verglichen. Werden in Blöcken des rekonstruierten Bildes deutliche Fehler entdeckt, wird die Vektorinformation des zugehörigen Blockes durch einen Interpolationsbefehl ersetzt. Die digitalen Vektor- und Interpolations-Informationen, im Folgenden Vektorinformationen genannt, werden in einem Zusatzinformations-Coder 17 entropiecodiert (entfernen von Redundanz) und kanalcodiert (hinzufügen eines Fehlerschutzes). Das vom Farbcoder 14 gelieferte Signal und die vom Zusatzinformations-Coder gelieferten digitalen Zusatzinformationen werden in einer nachfolgenden Multiplexschaltung 15 zusammengefaßt und anschließend übertragen bzw. aufgezeichnet. In Matrix 11 und in Multiplexschaltung 15 können die Signale A/D- bzw. D/A-gewandelt werden.

Im Vergleicher 163 kann statt des tiefpaßgefilterten progressiven Bildsignals auch das ungefilterte progressive Bildsignal am Eingang von Vertikalfilter 12 verwendet werden. Dann wird in Rekonstruktions-Schaltung 162 statt des Luminanzsignals am Ausgang des Interlacers 13 ebenfalls das über einen zusätzlichen Interlacer (nicht dargestellt) geleitete, ungefilterte progressive Bildsignal am Eingang von Vertikalfilter 12 verwendet.

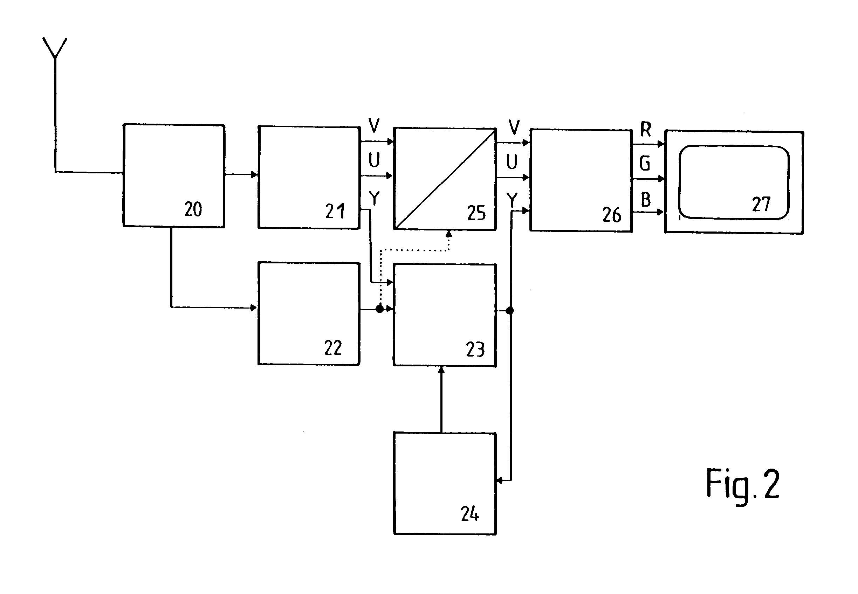

Im Decoder in Fig. 2 werden zunächst in Trennschaltung 20 die übertragenen bzw. aufgezeichneten digitalen Zusatzinformationen von den Interlace-Bildsignalen getrennt. Die Bildsignale werden anschließend in einem Farbdecoder 21 wieder in YUV-signale aufgespalten. Farbdecoder 21 hat die entsprechend inverse Funktion zu Farbcoder 14. Die digitalen Zusatzinformationen werden in Zusatzinformations-Decoder 22 kanal- und entropie-decodiert, sodaß bei genügendem Fehlerschutz die decodierten Zusatzinformationen den im Coder gebildeten Zusatzinformationen entsprechen. In einer Rekonstruktionsschaltung 23 wird das progressive Bildsignal aus dem übertragenen Interlace-Signal und den übertragenen Vektorinformationen sowie dem in Bildspeicher 24 zwischengespeicherten, vorhergehenden Vollbild rekonstruiert. Die Funktionen der decoderseitigen Rekonstruktionsschaltung 23 und des Bildspeichers 24 entsprechen den Funktionen der coderseitigen Rekonstruktionsschaltung 162 und des Bildspeichers 18.

Die Interlace-Progressiv-Wandlung der Farbkomponenten U und V erfolgt in einem Deinterlacer 25. Die Progressiv-Rekonstruktion der Farbkomponenten kann ebenso wie die der Luminanz durch die übertragenen Vektorinformationen erfolgen (angedeutet durch die Strichelung), doch aufgrund der relativ geringen Empfindlichkeit des Auges für Farbänderungen ist es auch möglich, die Farbsignale nur durch eine vertikale Interpolation in ein progressives Raster zu überführen.

In einer inversen Matrix 26 können anschließend wieder RGB-Signale aus den YUV-Signalen gewonnen und auf einem Display 27 wiedergegeben werden. In Trennschaltung 20 und in Matrix 26 können die Signale A/D- bzw. D/A-gewandelt werden.

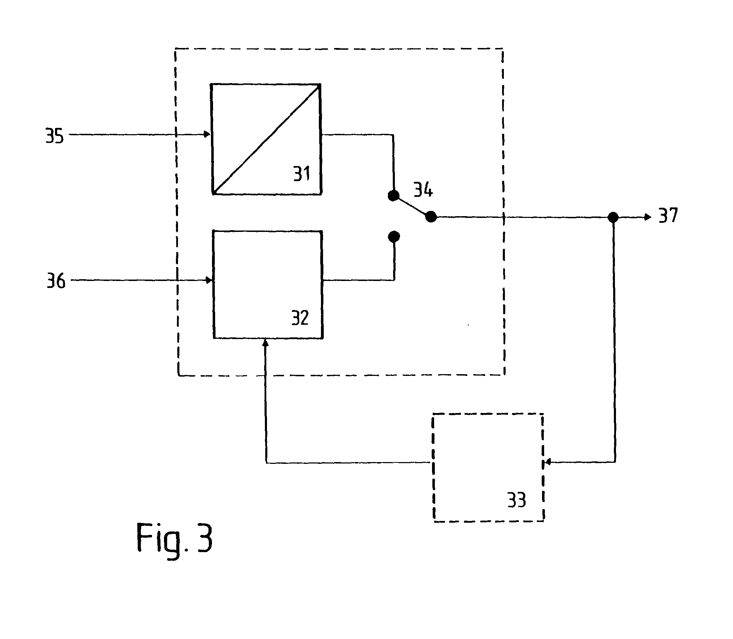

Anhand Fig. 3 wird die Progressiv-Bildrekonstruktion im Coder und im Decoder näher erläutert. Zur Rekonstruktion muß das jeweils vorher rekonstruierte Bild zur Verfügung stehen, so daß ein (gestrichelt gezeichneter) Vollbildspeicher 33 vorhanden ist, der den Bildspeichern 18 bzw. 24 entspricht. In dem den Rekonstruktionsschaltungen 162 bzw. 23 entsprechenden, gestrichelt eingerahmten Teil der Schaltung in Fig. 3 werden Bilder jeweils aus dem vorherigen Bild aus Vollbildspeicher 33 und den übertragenen Vektorinformationen 36 rekonstruiert, indem in einer vektorgesteuerten Interpolationsschaltung 32 jeder Block des neuen Bildes gewonnen wird aus einem dem vorangegangenen Bild entstammenden Block, dessen Lage durch den zu dem entsprechenden Block gehörenden Vektor angegeben wird. In einem Deinterlacer 31 wird außerdem das Interlace-Bildsignal 35 durch Interpolation bzw. Filterung in ein progressives Bild überführt. Dabei wird vorteilhaft ein Filter verwendet, das die Interlace-Zeilen nicht verändert, z.B. ein Halfband-Filter. Das endgültige rekonstruierte Signal wird mittels eines Umschalters 34 aus den Ausgangssignalen des Deinterlacers 31 und der vektorgesteuerten Interpolationsschaltung 32 zusammengesetzt, und zwar nach folgenden Regeln: Wenn die aktuelle darzustellende Zeile gleich einer übertragenen Interlace-Zeile ist, wird die Bildinformation dem Deinterlacer 31 entnommen. Muß dagegen eine Zeile dargestellt werden, die im aktuellen Bild nicht im Interlace-Signal übertragen wurde, wird das Signal der vektorgesteuerten Interpolationsschaltung 32 entnommen. Von dieser Regel wird nur abgewichen, wenn zu einem Bildpunkt-Block kein Vektor, sondern ein Interpolationsbefehl übertragen wurde, denn dann muß auch im zweiten Fall das Signal dem Deinterlacer 31 entnommen werden.

Die übertragenen Vektoren müssen dabei nicht nur auf Bewegungen innerhalb der Bildpunkt-Rastergenauigkeit beschränkt sein. Auch Bewegungen mit einer feineren Raster-Auflösung, z.B. Halb-Pixel-Genauigkeit, sind möglich. Beim Auftreten solcher Vektorinformationen kann das Ausgangssignal entsprechend aus den Zeilen des verzögerten Bildes interpoliert werden.

Für die Übertragung der digitalen Zusatzinformationen kann ebenfalls die horizontale und/oder die vertikale Austastlükke und/oder ein zusätzlicher Spektralbereich verwendet werden. Wenn das beschriebene Verfahren zur Einführung eines zum bisherigen Fernsehsystem mit Bildseitenverhältnis 4:3 kompatiblen Fernsehsystems mit Bildseitenverhältnis 16:9 unter Verwendung des obengenannten Letterbox-Formats eingesetzt wird, muß Kamera 10 Bilder im Format 16:9 erzeugen. Außerdem liefert die Kamera entweder nur 3/4 der ursprünglichen Zeilenzahl (z.B. 432 aktive Zeilen) oder das Kamerasignal wird in einem zusätzlichen Transcoder zwischen Matrix 11 und Vertikalfilter 12 durch Abtastratenwandlung in ein Bild mit entsprechend verringerter aktiver Zeilenzahl konvertiert. Der Vektorbildner 161 gewinnt dann aus Bildern mit dieser verringerten Zeilenzahl Vektorinformationen. Das Bild mit dem Bildseitenverhältnis 16:9 wird in Multiplexschaltung 15 in das ursprüngliche Bild im Format 4:3 eingebettet. Da die aktive Zeilenzahl auf 3/4 reduziert ist, wird oberhalb und unterhalb des 16:9-Bildes ein schwarzer Streifen frei. Dieses Letterbox-Verfahren wird bereits heute zur Übertragung von Kinofilmen verwendet. In den schwarzen Streifen können die digitalen Zusatzinformationen aus Zusatzinformations-Coder 17 übertragen werden.

Um im Decoder das Bild im neuen Format richtig darstellen zu können, ist entweder das Display 27 für die Darstellung der um 3/4 geringeren Zeilenzahl angepaßt oder es wird mittels eines zusätzlichen Transcoders die ursprüngliche aktive Zeilenzahl im Coder wiederhergestellt. Dieser Transcoder kann vor oder nach Matrix 26 angeordnet werden.

Vorteilhaft kann die Erfindung auch für andere Bildseitenverhältnisse angewendet werden, weil die Zusatz informationen auch bei anderen Zeilenzahl-Reduktionsfaktoren in Form von Vektorinformationen übertragen werden können.

Im Vertikalfilter 12 wird das progressive Bildsignal tiefpaßgefiltert, damit es im kompatiblen Interlace-Bild, wie es auf bisherigen Fernsehempfängern gezeigt wird, nicht zu Alias-Effekten kommt. Daher hat das rekonstruierte Bild auf dem Display 27 nicht die volle vertikale Auflösung, die am Ausgang von Matrix 11 zur Verfügung steht. Mit stärker werdender Verbreitung der Erfindung kann dann diese vertikale Tiefpaßfilterung verringert werden, um später, wenn fast nur noch Fernsehempfänger nach dem neuen Standard vorhanden sind, ganz weggelassen zu werden. Dann kann das Display 27 die gleiche vertikale Auflösung wie am Ausgang von Matrix 11 liefern.

Vorteilhaft können die übertragenen bzw. aufgezeichneten Vektorinformationen bei einer decoderseitigen Konvertierung der Bildwiedergabefrequenz, beispielsweise von 50 nach 100Hz, oder der Zeilenzahl, beispielsweise von 625 nach 1250 Zeilen, verwendet werden.

Außerdem können die übertragenen bzw. aufgezeichneten Zusatzinformationen auch digital codierte Audiodaten enthalten.

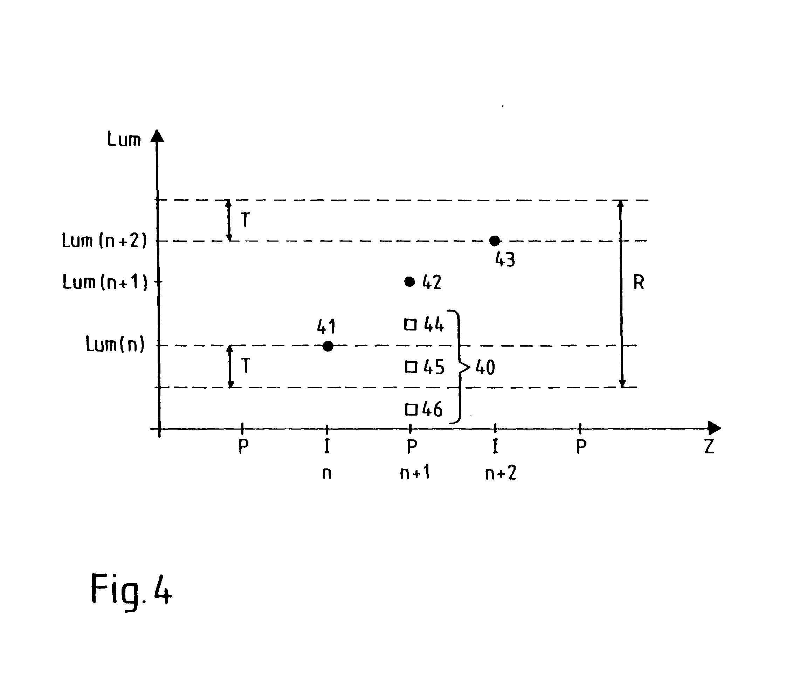

In Fig. 4 wird verdeutlicht, wie nicht geeignete Vektoren ermittelt werden können. Es sind die Helligkeitswerte Lum von Bildpunkten über der Zeilennummer Z aufgetragen. Progressiv-Zeilen P und Interlace-Zeilen I im 432-Zeilen Bild wechseln einander ab. Der Bildpunkt 41 aus der I-Zeile Nummer n hat die Helligkeit Lum(n), der Bildpunkt 42 aus P-Zeile n+1 die Helligkeit Lum(n+1) und der Bildpunkt 43 aus I-Zeile n+2 die Helligkeit Lum(n+2). Die Lagen 44, 45 und 46 stellen die in der Rekonstruktionsschaltung 162 möglicherweise ermittelte Lage eines mit Hilfe der Vektoren gebildeten Bildpunkts 40 für die P-Zeile n+1 dar. Oberhalb von Bildpunkt 43 und unterhalb von Bildpunkt 41 ist ein zusätzlicher Helligkeits-Toleranzbereich T und ein Bereich R angegeben. Je nach Lage von Bildpunkt 42 und Bildpunkt 40 werden folgende Fälle unterschieden (Bp = Bildpunkt):

| | |
|---|---|
| Bp 42 außerhalb R Bp 40 beliebig : | OK |
| Bp 42 innerhalb R, Bp 40 außerhalb R: | F |
| Bp 42 innerhalb R, Bp 40 innerhalb R: | OK |

F bedeutet, daß der Bildpunkt 40 als fehlerhaft markiert wird. OK bedeutet, daß Bildpunkt 40 als korrekt markiert wird. Wenn die beiden horizontal benachbarten Bildpunkte von Bildpunkt 40 als korrekt markiert sind, kann ein als fehlerhaft markierter Bildpunkt 40 nachträglich als korrekt markiert werden.

Der ermittelte Vektor für einen Bildpunkt-Block wird durch einen Interpolationsbefehl ersetzt, wenn die Anzahl der als fehlerhaft markierten Bildpunkte in einem 16∗16-Bildpunkt-block größer als neun ist und die Anzahl der als fehlerhaft markierten Bildpunkte in einem zum aktuellen Block zentrierten 20*20-Bildpunktblock größer als neunzehn ist.

Für die Übertragung bzw. Aufzeichnung der Vektorinformationen wird ein fehlerkorrigierender Code verwendet, der im Zusatzinformations-Coder 17 gebildet wird. Es kann z.B. ein Hamming-Code mit elf Informations-Bits und vier Prüf-Bits verwendet werden. Damit kann ein Fehler in jedem Datenblock korrigiert werden. Mit einem zusätzlichen Paritäts-Prüf-Bit können insgesamt zwei Fehler pro Datenblock detektiert werden.

Jeder Vektor wird mit zwei Komponenten (x und y) zwischen -15 und +15 beschrieben bei einer maximalen Verschiebung um ±7.5 Bildpunkte. Für jede Komponente sind 31 verschiedene Werte verfügbar, die im Zweier-Komplement übertragen werden. Das Codewort '-16' stellt einen Interpolationsbefehl dar. Jede Komponente eines Vektors wird mit 5 Bit übertragen. Das Code-Wort im Hamming-Code hat folgenden Aufbau:

X1 X2 X3 X4 X5 Y1 Y2 Y3 Y4 Y5 P C1 C2 C3 C4 X1 bis X5 sind die 5 Bits der X-Komponente, Y1 bis Y5 die der Y-Komponente, das P-Bit wird zunächst auf '0' gesetzt und C1 bis C4 sind Prüf-Bits. Die Prüf-Bits werden mit der Generatormatrix G berechnet:

$$G = \begin{bmatrix} 1&0&0&0&0&0&0&0&0&0&0&0&0&1&1\\ 0&1&0&0&0&0&0&0&0&0&0&0&1&0&1\\ 0&0&1&0&0&0&0&0&0&0&0&0&1&1&0\\ 0&0&0&1&0&0&0&0&0&0&0&0&1&1&1\\ 0&0&0&0&1&0&0&0&0&0&0&1&0&0&1\\ 0&0&0&0&0&1&0&0&0&0&0&1&0&1&0\\ 0&0&0&0&0&0&1&0&0&0&0&1&0&1&1\\ 0&0&0&0&0&0&0&1&0&0&0&1&1&0&0\\ 0&0&0&0&0&0&0&0&1&0&0&1&1&0&1\\ 0&0&0&0&0&0&0&0&0&1&0&1&1&1&0\\ 0&0&0&0&0&0&0&0&0&0&1&1&1&1&1 \end{bmatrix}$$

Anschließend wird die Parität des gesamten 15-Bit-Codeworts berechnet und an die Stelle des P-Bits geschrieben.

Bei der Decodierung wird zuerst das P-Bit in einen Speicher geschrieben und anschließend im Codewort auf '0' gesetzt. Durch Multiplikation des Codeworts mit der Prüf-Matrix H wird das Syndrom gefunden.

$$H = \begin{bmatrix} 0&0&1&1\\ 0&1&0&1\\ 0&1&1&0\\ 0&1&1&1\\ 1&0&0&1\\ 1&0&1&0\\ 1&0&1&1\\ 1&1&0&0\\ 1&1&0&1\\ 1&1&1&0\\ 1&1&1&1\\ 1&0&0&0\\ 0&1&0&0\\ 0&0&1&0\\ 0&0&0&1 \end{bmatrix}$$

Das Codewort wird korrigiert durch eine Modulo-2-Addition eines Fehler-Worts zum Codewort. Die Relation zwischen dem Syndrom und dem Fehler-Wort zeigt die folgende Tabelle:

| Syndrom | Fehler-Wort |
|---|---|
| 0000 | 000000000000000 |
| 0001 | 000000000000001 |
| 0010 | 000000000000010 |
| 0011 | 100000000000000 |
| 0100 | 000000000000100 |
| 0101 | 010000000000000 |
| 0110 | 001000000000000 |
| 0111 | 000100000000000 |
| 1000 | 000000000001000 |
| 1001 | 000010000000000 |
| 1010 | 000001000000000 |
| 1011 | 000000100000000 |
| 1100 | 000000010000000 |
| 1101 | 000000001000000 |
| 1110 | 000000000100000 |
| 1111 | 000000000010000 |

Anschließend wird die Parität des Codewortes berechnet. Die Parität ist richtig, falls sie gleich dem gespeicherten Bit 11 ist. Wenn die Parität einen anderen Wert hat, sind mindestens zwei Fehler aufgetreten. Der decodierte Vektor kann in diesem Fall ignoriert und durch einen Interpolationsbefehl ersetzt werden.

Die Modulation der digitalen Zusatzinformationen auf das FBAS-Signal kann ähnlich wie bei Videotext erfolgen. Allerdings ist die Amplitude des digitalen Signals bei der Übertragung unterschiedlich. Während Videotext für logisch '0' einen Pegel von 0mV und für logisch '1' einen Pegel von 490mV verwendet, wird bei der Erfindung beispielsweise -200mV für logisch '0' und 0mV für logisch '1' verwendet. Diese Pegel werden unter dem Gesichtspunkt einer möglichst geringen Sichtbarkeit der modulierten digitalen Zusatzinformationen in kompatiblen Decodern ausgewählt.
Andere Parameter, wie z.B. die Taktfrequenz $f_{Bit} = 444*f_H = 6.923$MBit/s oder die 24 Bit für die Synchronisation in jeder Zeile, können gleich sein. Daher können die Schaltungen zur Videotext-Modulation und/oder -Demodulation vorteilhaft auch zur Modulation und/oder Demodulation der digitalen Zusatzinformationen in erfindungsgemäßen Codern und/ oder Decodern verwendet werden.

Jede Zeile enthält 360 Bits. Davon sind 336 Bits zur Codierung der digitalen Zusatzinformationen verwendbar, weil 24 Bits für die Synchronisation benötigt werden. Daher können in jeder Zeile die Daten von 22 Vektoren übertragen werden. Die 6 übrigen Bits können auf '0' gesetzt werden und Halbbildalternierend vor bzw. nach den Vektorinformationen übertragen bzw. aufgezeichnet werden.
Bei einer Zahl von 432 aktiven Zeilen, 720 Bildpunkten pro Zeile und einer Blockgröße von 16*16 Bildpunkten müssen 1215 Vektoren pro Vollbild übertragen werden. Enthält jede entsprechende Zeile 22 Vektoren, so werden 56 Zeilen pro Vollbild benötigt. Weil für jedes übertragene Interlace-Halbbild die Vektoren für ein progressives Bild benötigt werden, bleiben von den 72 Zeilen pro Halbbild in den Streifen des Letterbox-Formats 16 Zeilen übrig (268.8kBit/s), die für einen weitergehenden Fehlerschutz und/oder für die Übertragung bzw. Aufzeichnung von zusätzlichen Daten, z. B. digitalen Audiodaten, benutzt werden können.

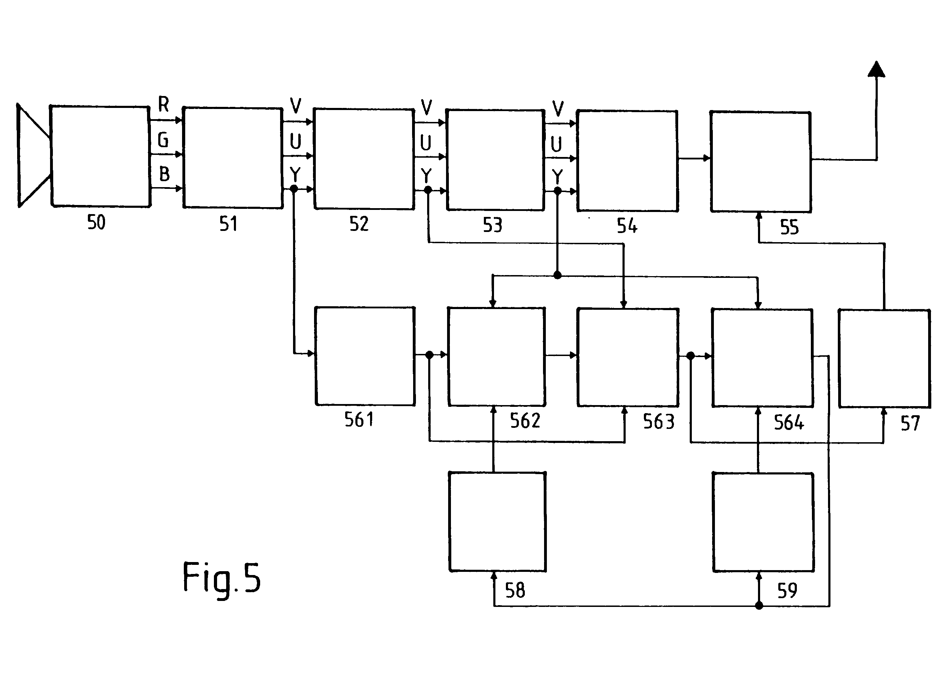

In Fig. 5 kann eine Kamera 50 RGB-Signale entsprechend Kamera 10 liefern. Die RGB-Signale werden in einer Matrix 51 in das Luminanzsignal Y und die Chrominanzsignale U und V gewandelt. AnschlieBend werden die YUV-Signale in einem Vertikalfilter 52 für die anschließende Progressiv-Interlace-Umsetzung im Interlacer 53 tiefpaßgefiltert, um im Interlace-Bild der herkömmlichen Empfänger Alias zu vermeiden. Die gefilterten YUV-Bildsignale werden in einem anschließenden Farbcoder 54 zu kombinierten Y-C-Bildsignalen umgeformt. Dabei kann es sich sowohl um eine Umformung handeln, bei der die Chrominanz auf einem Träger der Luminanz überlagert wird (PAL, NTSC, SECAM) als auch um eine Umformung, bei der Luminanz Y und Chrominanz C im Zeitmultiplex angeordnet werden (MAC).

Die Bewegungsvektoren für die Bildpunkt-Blöcke werden in einem Vektorbildner 561 aus dem Luminanzsignal gewonnen, welches in der Matrix 51 erzeugt wurde. Dazu wird das Bild in Bildpunkt-Blöcke mit einer Größe entsprechend der Beschreibung für Fig. 1 aufgeteilt. Vorteilhaft hat der Vektorbildner 561 einen Suchbereich von ±8 Bildpunkten mit einer zusätzlichen Halbpixel-Suche. Weil die Vektoren aus dem Eingangssignal des Vertikalfilters 52 gebildet werden, wird eine höhere vertikale Auflösung der Vektoren ermöglicht. Die Vektoren können aber auch aus dem Ausgangssignal des Vertikalfilters 52 gebildet werden.
In einer ersten Rekonstruktions-Schaltung 562 werden aus dem jeweils um ein Vollbild verzögerten, vorher rekonstruierten Luminanz-Vollbild aus einem ersten Bildspeicher 58 und dem Luminanzsignal am Ausgang des Interlacers 53 mit Hilfe der im Vektorbildner 561 gefundenen Bewegungsvektoren progressive Bilder rekonstruiert.
In einem nachgeschalteten Vergleicher 563 wird jeweils das so rekonstruierte progressive Bild und das originale progressive Bild (vor der Interlace-Unterabtastung) miteinander verglichen. Werden in Blöcken des rekonstruierten Bildes deutliche Fehler entdeckt, wird die Vektorinformation des zugehörigen Blockes durch einen Interpolationsbefehl ersetzt.
Die Vektorinformationen werden in einem Zusatzinformations-Coder 57 entropiecodiert und kanalcodiert. Das vom Farbcoder 54 gelieferte Signal und die vom Zusatzinformations-Coder 57 gelieferten digitalen Zusatzinformationen werden in einer nachfolgenden Multiplexschaltung 55 zusammengefaßt und anschließend übertragen bzw. aufgezeichnet. In Matrix 51 und in Multiplexschaltung 55 können die Signale A/D- bzw. D/A-gewandelt werden.
Im Vergleicher 563 kann statt des tiefpaßgefilterten progressiven Bildsignals auch das ungefilterte progressive Bildsignal am Eingang von Vertikalfilter 52 verwendet werden. Dann wird in der ersten Rekonstruktions-Schaltung 562 statt des Luminanzsignals am Ausgang des Interlacers 53 ebenfalls das über einen zusätzlichen Interlacer (nicht dargestellt) geleitete, ungefilterte progressive Bildsignal am Eingang von Vertikalfilter 52 verwendet.
Um die Decodierung im Decoder besser senderseitig zu berücksichtigen, werden gegenüber Fig. 1 zusätzlich in einer zweiten Rekonstruktions-Schaltung 564 aus dem jeweils um ein Vollbild verzögerten, vorher rekonstruierten Luminanz-Vollbild aus einem zweiten Bildspeicher 59 und aus dem Luminanzsignal am Ausgang des Interlacers 53 mit Hilfe der im Vergleicher 563 korrigierten Vektorinformationen progressive Bilder rekonstruiert. Am Ausgang der zweiten RekonstruktionsSchaltung 564 steht somit das progressive Bildsignal in der Form zur Verfügung, wie es auch der Decoder aus dem übertragenen Interlace-Signal rekonstruieren würde. Dieses rekonstruierte Bild dient bei der Verarbeitung des nächsten Bildes sowohl der ersten Rekonstruktions-Schaltung 562 als auch der zweiten Rekonstruktions-Schaltung 564 als Quelle des vorangegangenen rekonstruierten Bildes.
Die Ausgangssignale des zweiten Bildspeichers 59 sind passend zur Signal-Verarbeitungszeit im Vergleicher 563 gegenüber den Ausgangssignalen des ersten Bildspeichers 58 verzögert. Der Eingang des zweiten Bildspeichers kann darum auch an den Ausgang des ersten Bildspeichers angeschlossen sein.

Für andere Zeilenzahlen oder Bildseitenverhältnisse werden die genannten Zahlen entsprechend angepaßt.

**Patentansprüche**

1. Verfahren zur kompatiblen Übertragung und/oder Aufzeichnung von progressiven Bildsignalen, die in Interlace-Bildsignale umgewandelt und mit digitalen Zusatzinformationen versehen werden und von Standard-Decodern ohne Auswertung dieser Zusatzinformationen decodiert werden können, wobei die Zusatzinformationen Bewegungsvektoren für Bildpunkt-Blöcke enthalten, **gekennzeichnet durch:**

   - decoderseitig sind die Bildpunkt-Werte der den Zeilen der Interlace-Bildsignale entsprechenden Zeilen der progressiven Bildsignale gleich den entsprechenden Bildpunkt-Werten der Interlace-Bildsignale;
   - für die decoderseitige Berechnung der Bildpunkt-Werte der anderen Zeilen werden coderseitig Bewegungsvektoren ermittelt;
   - im Fall von nicht korrekt ermittelbaren oder nur mit begrenzter Auflösung übertragbaren Bewegungsvektoren, die decoderseitig zu sichtbaren Rekonstruktionsfehlern führen, werden diese Bewegungsvektoren coderseitig durch Interpolationsbefehle für Bildpunkt-Blöcke ersetzt, deren Bildpunkt-Werte decoderseitig durch Interpolation aus den Bildpunkt-Werten der Zeilen der Interlace-Bildsignale interpoliert werden.

2. Verfahren nach Anspruch 1, **dadurch gekennzeichnet**, daß die digitalen Zusatzinformationen in der vertikalen und/oder horizontalen Austastlücke angeordnet werden.

3. Verfahren nach Anspruch 1 oder 2, **dadurch gekennzeichnet,** daß im Fall von Bildsignalen im Letterbox-Format die digitalen Zusatzinformationen in den Streifen des Letterbox-Formats angeordnet werden.

4. Verfahren nach Anspruch 3, **dadurch gekennzeichnet**, daß die Zusatzinformationen im Ultraschwarz-Bereich liegen.

5. Verfahren nach einem oder mehreren der Ansprüche 1 bis 4, **dadurch gekennzeichnet**, daß die Chrominanzkomponenten der progressiven Bildsignale bei der Decodierung mit Hilfe der digitalen Zusatzinformationen ermittelt werden.

6. Verfahren nach einem oder mehreren der Ansprüche 1 bis 5, **dadurch gekennzeichnet**, daß die digitalen Zusatzinformationen digital codierte Audiodaten enthalten.

7. Verfahren nach einem oder mehreren der Ansprüche 1 bis 6, **dadurch gekennzeichnet,** daß die Bewegungsinformationen zu einer decoderseitigen Konvertierung der Bildwiedergabefrequenz und/oder der Zeilenzahl verwendet werden.

8. Coder für ein Verfahren nach einem oder mehreren der Ansprüche 1 bis 7, versehen mit einem Vertikalfilter (12, 52) für progressive Bildsignale, die anschließend in einem Interlacer (13, 53) vom progressiven Bildformat in ein Interlace-Bildformat umgesetzt werden, mit einem nachfolgenden Farbcoder (14, 54), mit einem Vektorbildner (161, 561), der aus dem Luminanzsignal am Eingang des Vertikalfilters (12, 52) Bewegungsvektoren für die Bildpunkt-Blöcke gewinnt, mit einer nachgeschalteten Rekonstruktions-Schaltung (162, 562), die aus dem jeweils um ein Vollbild verzögerten, vorher rekonstruierten Luminanz-Vollbild aus einem Bildspeicher (18, 58) und aus dem Luminanzsignal am Ausgang des Interlacers (13, 53) mit Hilfe der im Vektorbildner (161, 561) gefundenen Bewegungsvektoren progressive Bildsignale rekonstruiert, mit einem nachgeschalteten Vergleicher (163, 563) zur Ermittlung von Bildpunkt-Blöcken mit zuzuordnendem Interpolationsbefehl, mit einem nachgeschalteten Zusatzinformations-Coder (17, 57) zur Entropie- und Kanalcodierung der digitalen Zusatzinformationen und mit einer nachfolgenden Multiplexschaltung (15, 55), die die Ausgangssignale des Farbcoders (14, 54) und des Zusatzinformations-Coders (17, 57) zusammenfaßt vor der Übertragung bzw. Aufzeichnung, wobei im Fall von nicht korrekt ermittelbaren oder nur mit begrenzter Auflösung übertragbaren Bewegungsvektoren, die decoderseitig zu sichtbaren Rekonstruktionsfehlern führen, diese Bewegungsvektoren durch den Vergleicher (163, 563) durch Interpolationsbefehle für Bildpunkt-Blöcke ersetzt werden.

9. Coder nach Anspruch 8 mit einer zweiten RekonstruktionsSchaltung (564), die aus dem jeweils um ein Vollbild verzögerten, vorher rekonstruierten Luminanz-Vollbild aus einem zweiten Bildspeicher (59) und aus dem Luminanzsignal am Ausgang des Interlacers (53) und mit Hilfe der Ausgangssignale des Vergleichers (563) progressive Bildsignale rekonstruiert, die den Eingängen der beiden Bildspeicher (58, 59) zugeführt werden.

10. Decoder für ein Verfahren nach einem oder mehreren der Ansprüche 1 bis 7, versehen mit einer Trennschaltung (20) zur Abtrennung von übertragenen bzw. aufgezeichneten digitalen Zusatzinformationen von den Interlace-Bildsignalen, mit einem nachfolgenden Farbdecoder (21), mit einem nachgeschalteten Deinterlacer (25) für die Chrominanzkomponenten, mit einem Zusatzinformations-Decoder (22) zur Kanal- und Entropie-Decodierung der abgetrennten Zusatzinformationen, mit einer nachfolgenden Rekonstruktionsschaltung (23) zur Rekonstruktion eines progressiven Luminanz-Bildsignals aus dem Interlace-Bildsignal und den decodierten Bewegungsinformationen sowie einem jeweils in Bildspeicher (24) zwischengespeicherten, vorhergehenden Vollbild, wobei im Fall von Interpolationsbefehlen für Bildpunkt-Blöcke deren Bildpunkt-Werte in der Rekonstruktionsschaltung (23) durch Interpolation aus den Bildpunkt-Werten der Zeilen der Interlace-Bildsignale interpoliert werden.

## Claims

1. Method of compatibly transmitting and/or recording progressive image signals which are converted into interlaced image signals and provided with auxiliary items of digital information and which can be decoded by standard decoders without evaluating these auxiliary items of information, wherein the auxiliary items of information include movement vectors for blocks of picture elements, characterised by:

- at the decoder end, the values of the picture elements in the lines of the progressive image signals corresponding to the lines of the interlaced image signals are equal to the corresponding values of the picture elements in the interlaced image signals;
- for the computation at the decoder end of the values of the picture elements in the other lines, movement vectors are established at the coder end;
- in the event of movement vectors that are not correctly determinable or of movement vectors that are only transmissible with limited resolution thus leading to visible reconstruction errors at the decoder end, these movement vectors are replaced at the coder end by interpolation commands for blocks of picture elements whose picture element values are interpolated at the decoder end by interpolation from the picture element values for the lines of the interlaced image signal.

2. Method in accordance with Claim 1, characterised in that, the auxiliary items of digital information are arranged in the vertical and/or horizontal blanking intervals.

**3.** Method in accordance with Claim 1 or 2, characterised in that, the auxiliary items of digital information are arranged in the stripes of the letter box format in the event that the image signals are in the letter box format.

**4.** Method in accordance with Claim 3, characterised in that, the auxiliary items of information are located in the ultra-black region.

**5.** Method in accordance with one or more of the Claims 1 to 4, characterised in that, the chrominance components of the progressive image signals are determined during the decoding process with the aid of the auxiliary items of digital information.

**6.** Method in accordance with one or more of the Claims 1 to 5, characterised in that, the auxiliary items of digital information include digitally coded audio data.

**7.** Method in accordance with one or more of the Claims 1 to 6, characterised in that, the items of movement information are used at the decoder end for converting the image reproduction frequency and/or the number of lines.

**8.** Coder for a method in accordance with one or more of the Claims 1 to 7, which is provided with a vertical filter (12, 52) for progressive image signals that are subsequently converted from a progressive image format into an interlaced image format in an interlacer (13, 53), with a succeeding colour coder (14, 54), with a vector forming means (161, 561) that obtains movement vectors for the blocks of picture elements from the luminance signal at the input of the vertical filter (12, 52), with a subsequently connected reconstruction circuit (162, 562) that reconstructs progressive image signals with the aid of the movement vectors found in the vector forming means (161, 561) from the previously reconstructed luminance frame stored in an image store (18, 58), which frame is delayed on each occasion by one frame, and from the luminance signal at the output of the interlacer (13, 53), with a subsequently connected comparator (163, 563) used for detecting blocks of picture elements having associated interpolation commands, with a subsequently connected auxiliary information coder (17, 57) for coding the entropy and channel of the auxiliary items of digital information, and with a succeeding multiplexing circuit (15, 55) that combines the output signals from the colour coder (14, 54) and the auxiliary information coder (17, 57) before the transmission or recording process, whereby, in the event of movement vectors that are not correctly determinable or of movement vectors that are only transmissible with limited resolution thus leading to visible reconstruction errors at the decoder end, these movement vectors are replaced, by means of the comparator (163, 563), by interpolation commands for blocks of picture elements.

**9.** Coder in accordance with Claim 8, including a second reconstruction circuit (564) which, with the aid of the output signals from the comparator (563), reconstructs progressive image signals from the previously reconstructed luminance frame stored in a second image store (59), which frame is delayed on each occasion by one frame, and from the luminance signal at the output of the interlacer (53), said progressive image signals being supplied to the inputs of the two image stores (58, 59).

**10.** Decoder for a method in accordance with one or more of the Claims 1 to 7, provided with a splitting circuit (20) for separating transmitted or recorded auxiliary items of digital information from the interlaced image signals, with a succeeding colour decoder (21), with a subsequently connected de-interlacer (25) for the chrominance components, with an auxiliary information decoder (22) for decoding the channel and entropy of the separated items of auxiliary information, with a succeeding reconstruction circuit (23) for reconstructing a progressive luminance image signal from the interlaced image signal and the decoded movement information together with a preceding frame that was buffer stored on each occasion in an image store (24), whereby in the event of there being interpolation commands for blocks of picture elements, their picture element values are interpolated in the reconstruction circuit (23) by interpolation from the picture element values for the lines of the interlaced image signals.

## Revendications

**1.** Un procédé de transmission et/ou d'enregistrement compatibles de signaux vidéo progressifs convertis en signaux vidéo d'entrelacement dotés d'informations numériques supplémentaires et pouvant être décodés par des décodeurs standard sans exploitation de ces informations supplémentaires où les informations supplémentaires contiennent des vecteurs de mouvement pour les blocs de points d'image, **caractérisé en ce que :**

- côté décodeur, les valeurs de point d'image des lignes de signal vidéo progressif correspondant aux lignes des signaux vidéo d'entrelacement sont identiques aux valeurs de points d'image des signaux vidéo d'entrelacement,

- pour le calcul côté décodeur des valeurs de points d'image des autres lignes, des vecteurs de mouvement sont déterminés côté codeur,
- en cas de vecteurs de mouvement impossibles à déterminer correctement ou ne pouvant être transmis qu'à faible résolution, ce qui entraîne des erreurs flagrantes de reconstruction côté décodeur, ces vecteurs de mouvement sont remplacés côté codeur par des instructions d'interpolation pour les blocs de points d'image dont les valeurs de points d'image seront interpolées côté décodeur par interpolation à partir des valeurs de points d'image des lignes des signaux vidéo d'entrelacement.

**2.** Procédé selon la revendication 1, **caractérisé en ce que** les informations numériques supplémentaires sont disposées dans les intervalles d'échantillonnage verticaux et/ou horizontaux.

**3.** Procédé selon la revendication 1 ou 2, **caractérisé en ce qu'**en cas de signaux vidéo au format boîte à lettres les informations numériques supplémentaires sont disposées dans les bandes du format boîte à lettres.

**4.** Procédé selon la revendication 3, **caractérisé en ce que** les informations supplémentaires sont disposées dans le domaine ultra noir.

**5.** Procédé selon l'une au moins des revendications 1 à 4, **caractérisé en ce que** les composantes de chrominance des signaux vidéo progressifs sont déterminées lors du décodage à l'aide des informations numériques supplémentaires.

**6.** Procédé selon l'une au moins des revendications 1 à 5, **caractérisé en ce que** les informations numériques supplémentaires comportent des données audio.

**7.** Procédé selon l'une au moins des revendications 1 à 6, **caractérisé en ce que** les informations de mouvement sont utilisées pour la conversion côté décodeur de la fréquence de lecture d'image et/ou du nombre de lignes.

**8.** Codeur pour le procédé selon l'une au moins des revendications 1 à 7, équipé d'un filtre vertical (12, 52) pour signaux vidéo progressifs qui sont ensuite convertis du format vidéo progressif au format vidéo d'entrelacement dans un dispositif d'entrelacement (13, 53) d'un codeur couleur (14, 54) d'un générateur de vecteurs (161, 561) qui obtient les vecteurs de mouvement pour les blocs de points d'image à partir du signal de luminance en entrée du filtre vertical (12, 52) d'un circuit de reconstruction (162, 562) situé en aval qui reconstruit des signaux vidéo progressifs à l'aide des vecteurs de mouvement présents dans le génerateur de mouvements (161, 561) à partir de l'image de luminance précedemment reconstruite décalée à chaque fois d'une image et provenant d'une mémoire vidéo (18, 58) et du signal de luminance en sortie du dispositif d'entrelacement (13, 53) d'un comparateur (163, 563) situé en aval pour la détermination des blocs de points d'image avec instruction d'interpolation à classer, d'un codeur d'informations supplémentaires (17, 57) situé en aval pour codage d'entropie et de canal des informations numériques supplémentaires et d'un circuit de multiplexage en aval (15, 55) qui regroupe les signaux de sortie du codeur couleur (14, 54) et du codeur d'informations supplémentaires (17, 57) avant la transmision et/ou l'enregistrement, qui en cas de vecteurs de mouvement impossibles à déterminer correctement ou ne pouvant être transmis qu'à faible résolution, ce qui entraîne des erreurs flagrantes de reconstruction côté décodeur, remplace ces vecteurs de mouvement via le comparateur (163, 563) par des instruction d'interpolation pour les blocs de points d'image.

**9.** Codeur selon la revendication 8 avec un deuxième circuit de reconstruction (564) qui reconstruit les signaux vidéo progressifs à partir de l'image de luminance précédemment reconstruite et décalée d'une image à chaque fois et provenant d'une deuxième mémoire vidéo (59) et du signal de luminance en sortie du dispositif d'entrelacement (53) à l'aide des vecteurs de mouvements corrigés dans le comparateur de vecteurs (563). Ces signaux vidéo progressifs sont acheminés vers les entrées des deux mémoires vidéo (58, 59).

**10.** Décodeur pour le procédé selon l'une au moins des revendications 1 à 7, équipé d'un circuit de séparation (20) pour la séparation des informations numériques supplémentaires transmises et/ou enregistrées des signaux vidéo d'entrelacement, d'un codeur couleur (21), d'un dispositif de désentrelacement (25) pour les composants de chrominance, d'un décodeur d'informations supplémentaires (22) pour décodage d'entropie et de canal des informations supplémentaires séparées, d'un circuit de reconstruction (23) pour la reconstruction d'un signal vidéo de luminance progressif à partir du signal vidéo d'entrelacement et des informations de mouvement décodées, ainsi qu'une image antérieure mémorisée à chaque fois dans la mémoire vidéo (24) caractérisé en ce qu'en cas d'instructions d'interpolation pour les blocs de points d'image, les valeurs de ces derniers sont interpolées dans le circuit de reconstruction (23) par interpolation à partir des valeurs de point d'image des lignes des signaux vidéo d'entrelacement.

10
R
G
B
11
V
U
Y
12
V
U
Y
13
V
U
Y
14
15
161
162
163
17
18
Fig.1

20
21
22
23
24
25
26
27
V
U
Y
V
U
Y
R
G
B

Fig. 2

37
34
33
31
32
35
36

Fig. 3

Lum
Lum (n+2)
Lum (n+1)
Lum(n)
Z
R
T
T
P
I
P
I
P
n
n+1
n+2
41
42
43
40
44
45
46

Fig. 4

50
R
G
B
51
V
U
Y
52
V
U
Y
53
V
U
Y
54
55
57
561
562
563
564
58
59

Fig.5